# EUROPÄISCHE PATENTSCHRIFT

(11) **EP 1 240 048 B1**
(45) Veröffentlichungstag und Bekanntmachung des Hinweises auf die Patenterteilung: **07.09.2005**
(21) Anmeldenummer: 01980494.7
(22) Anmeldetag: 17.10.2001
(51) Int. Cl.: B60N 2/235

(54) **EINSTELLER FÜR EINEN FAHRZEUGSITZ**
ADJUSTER FOR A VEHICLE SEAT
ELEMENT DE REGLAGE DESTINE A UN SIEGE DE VEHICULE

(30) Priorität: 20.10.2000 DE 10052092
(43) Veröffentlichungstag der Anmeldung: 18.09.2002
(73) Patentinhaber: KEIPER GmbH & Co. KG, 67657 Kaiserslautern (DE)
(72) Erfinder: HÄNSEL, Richard, 55237 Flonheim (DE); RUETH, Andreas, 67663 Kaiserslautern (DE)
(74) Vertreter: Patentanwälte Hosenthien-Held und Dr. Held
(86) Internationale Anmeldenummer: PCT/EP2001/012000
(87) Internationale Veröffentlichungsnummer: WO 2002/034564

(56) Entgegenhaltungen:
- EP-A- 0 506 580
- EP-A- 0 776 781
- FR-A- 2 730 960
- JP-A- 1 218 407
- US-A- 4 146 267
- US-A- 5 340 196

## Beschreibung

Die Erfindung betrifft einen Einsteller für einen Fahrzeugsitz mit den Merkmalen des Oberbegriffs des Anspruches 1.

Mit einem aus der EP 0 506 580 A1 bekannten, als Gelenkbeschlag ausgebildeten Einsteller dieser Art ist die Rückenlehne eines Fahrzeugsitzes im Fond eines Kraftfahrzeuges in ihrer Neigung einstellbar. Ein plattenförmiges Beschlagunterteil ist mit der Sitzteilstruktur verbunden, während ein ebenfalls plattenförmiges Beschlagoberteil mit der Struktur der Rückenlehne verbunden ist. Im Crashfall werden über den Gelenkbeschlag Kräfte von der Rückenlehne in die Sitzteilstruktur geleitet. Die Sperrklinke und die weiteren Verriegelungselemente werden diesen hohen Kräften ausgesetzt und müssen daher stark dimensioniert sein. Daher sind der das Beschlagoberteil lagernde Lehnenbolzen und der die Sperrklinke lagernde Klinkenbolzen mittels zweier seitlicher Laschen gelagert, welche auf einer Seite des Beschlagunterteils befestigt sind.

Der Erfindung liegt die Aufgabe zu Grunde, einen Einsteller der eingangs genannten Art zu verbessern. Diese Aufgabe wird erfindungsgemäß durch einen Einsteller mit den Merkmalen des Anspruches 1 gelöst. Vorteilhafte Ausgestaltungen sind Gegenstand der Unteransprüche.

Mittels den Laschen bleibt das Zusammenwirken zwischen der Sperrklinke und dem zweiten Beschlagteil, beispielsweise ein Zahneingriff, unverändert erhalten. Bei gleicher Sicherheit können die Lager von Sperrklinke und zweitem Beschlagteil geringer dimensioniert werden. Dies reduziert das Gewicht des Einstellers und vereinfacht und verbilligt die Herstellung, insbesondere des ersten Beschlagteils. Beispielsweise kann das erste Beschlagteil aus dünnem Blech mit konstanter Dicke gefertigt werden.

Dadurch, dass das erste Beschlagteil als Hohlprofil ausgebildet ist, in dessen Innerem die Sperrklinke angeordnet ist und auf dessen Außenseiten je eine der beiden Laschen angeordnet ist, also eine wenigstens teilweise geschlossene Form mit einem Innenraum für die Aufnahme der Verriegelungs- und Sicherungselemente aufweist, kann auf dessen Außenseiten je eine Lasche angeordnet sein, so dass kein Bauraum im Inneren des Beschlagunterteils geschaffen werden muss. Außerdem stützen die Laschen dann die Endabschnitte des Klinkenbolzens ab, so daß die auftretenden Kräfte mit einem möglichst geringen Hebelarm wirksam werden.

Die Lasche sind einfach und kostengünstig herzustellen und zu montieren. Für eine symmetrische Kraftübertragung auf den Lehnenbolzen sind zwei Laschen vorgesehen, welche dann jeweils höchstens die Hälfte der auftretenden Kräfte aufnehmen müssen. Um die auftretenden Kräfte besser aufnehmen und weiterleiten zu können, ist die Lasche vorzugsweise aus hochfestem Stahl gefertigt.

Der erfindungsgemäße Einsteller findet vorzugsweise als Gelenkbeschlag, d.h. als Lehneneinsteller, bei einer Rücksitzbank im Fond eines Kraftfahrzeuges Anwendung, beispielsweise eines sogenannten Vans, könnte aber auch bei einem Beifahrersitz oder in weiteren Sitzreihen eingesetzt werden. Ein solcher Gelenkbeschlag kann zusätzlich mit einer Steuerkurve versehen sein, die mit der Sperrklinke zusammenwirkt, um die möglichen Sitzstellungen und eine Tischstellung steuern zu können. Ferner können spielfreistellende Mittel vorhanden sein.

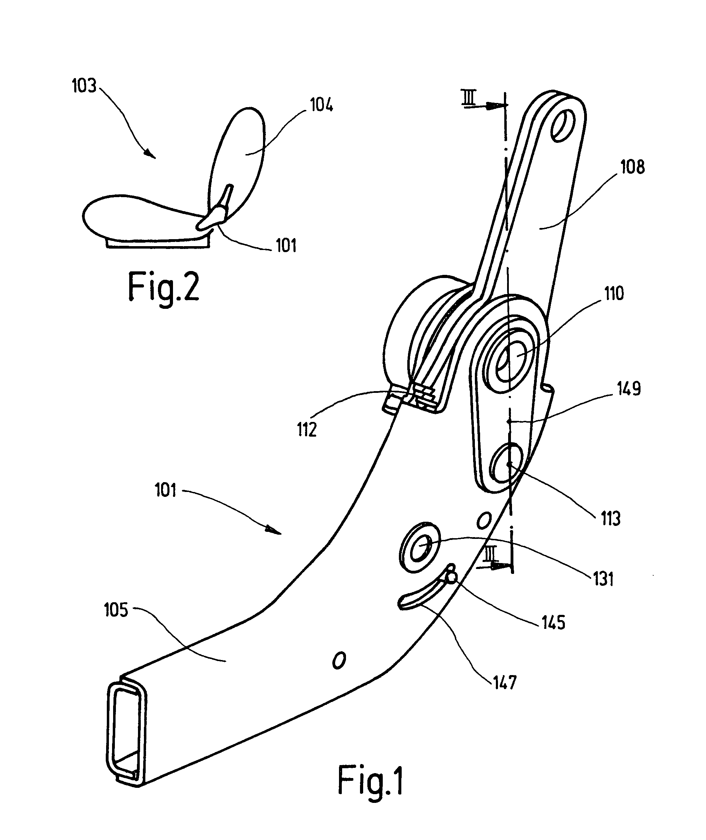

Im folgenden ist die Erfindung anhand eines in der Zeichnung dargestellten Ausführungsbeispiels näher erläutert. Es zeigen
- Fig. 1: eine perspektivische Ansicht des Ausführungsbeispiels,
- Fig. 2: eine schematische Seitenansicht eines Fahrzeugsitzes,

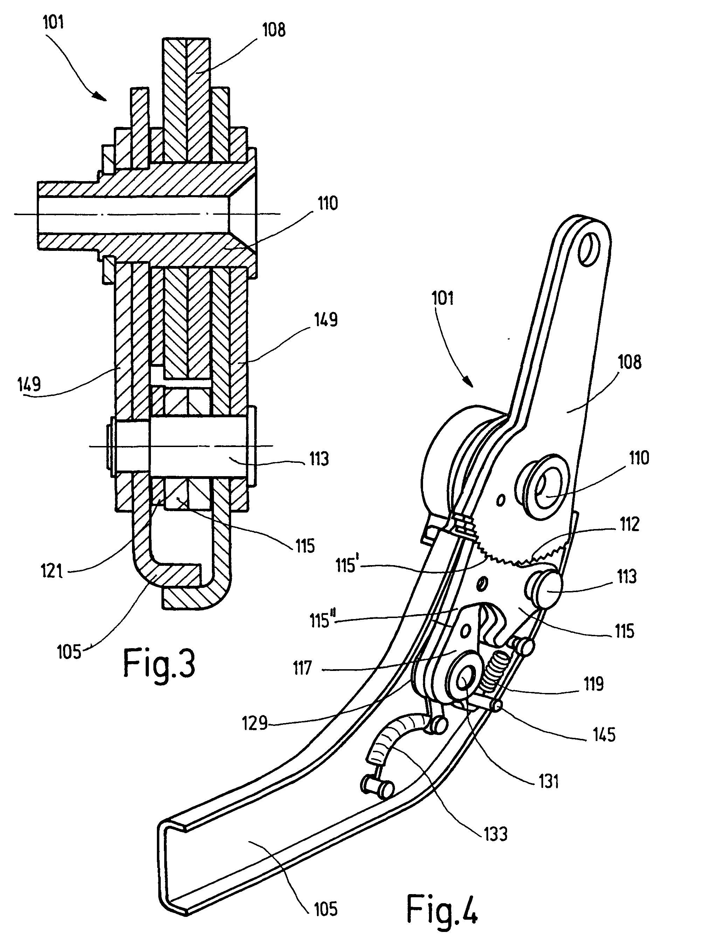

- Fig. 3: einen Schnitt entlang der Linie III-III in Fig. 1, und
- Fig. 4: eine Fig. 1 entsprechende, teilweise geschnittene Darstellung des Ausführungsbeispiels.

Das Ausführungsbeispiel betrifft einen Gelenkbeschlag 101 für eine Rücksitzbank 103 eines Kraftfahrzeuges, deren Anordnung in Kraftfahrzeug und dessen normale Fahrtrichtung die nachfolgenden Richtungsangaben definieren. Der als Neigungseinsteller für die Rückenlehne 104 vorgesehene Gelenkbeschlag 101 ist als Rastbeschlag ausgebildet. Auf beiden Seiten der Rücksitzbank 103, oder bei einer Ausbildung mit einer 1/3 - 2/3 - Lehne auf den Außenseiten oder auf beiden Seiten der entsprechenden Teile der Rückenlehne 104, ist je ein Gelenkbeschlag 101 vorgesehen, mittels dessen die Rückenlehne 104 mehrere verschiedene Sitzstellungen und eine Tischstellung einnehmen kann. Jeder Gelenkbeschlag 101 weist ein Beschlagunterteil 105, welches fest an der Sitzteilstruktur der Rücksitzbank 103 angebracht ist, und ein Beschlagoberteil 108 auf, welches fest an der Struktur der Rückenlehne 104 befestigt ist. Das Beschlagunterteil 105 ist zweiteilig ausgebildet, wobei die beiden Teile mit überlappendem Randbereich zu einem Hohlprofil zusammengefügt sind. Das Beschlagoberteil 108 ist drehbar im Beschlagunterteil 105 gelagert mittels eines in y-Richtung (d.h. horizontal und quer zur Fahrtrichtung) ausgerichteten Lehnenbolzens 110 als Drehachse, wodurch die Rückenlehne 104 der Rücksitzbank 103 relativ zum Sitzteil der Rücksitzbank 103 verschwenkbar ist.

Das Beschlagoberteil 108 trägt an seinem unteren, von der Rückenlehne 104 abgewandten Ende konzentrisch zum Lehnenbolzen 110 einen Zahnkranz 112. Am Beschlagunterteil 105 ist auf einem unterteilfesten Klinkenbolzen 113 eine Sperrklinke 115 schwenkbar gelagert. Die Sperrklinke 115 weist eine Verzahnung 115' auf, welche ungefähr auf den Lehnenbolzen 110 ausgerichtet ist und welche mit dem in der gleichen Ebene befindlichen Zahnkranz 112 zusammenwirken kann. Befindet sich die Rücksitzbank 103 in einer Sitzstellung, so liegt der Zahnkranz 112 im Schwenkbereich der Sperrklinke 115. Die federbelastete Sperrklinke 115 ist bei dieser Neigung der Rückenlehne 104 mit ihrer Verzahnung in den Zahnkranz 112 eingefallen und verriegelt dadurch den Gelenkbeschlag 101. Der Zahnkranz 112 erstreckt sich über einen so großen Winkelbereich, daß mehrere verriegelbare Sitzstellungen, also mehrere Neigungen der Rückenlehne 104, möglich sind.

Die Sperrklinke 115 wird durch ein am Beschlagunterteil 105 schwenkbar gelagertes, nockenförmiges Fangstück 117 für den Crashfall gesichert. Das Fangstück 117 ist durch eine Fangstückfeder 119 in Richtung auf die Sperrklinke 115 hin vorgespannt und liegt an einem radial abstehenden Klinkenarm 115" als Anschlag an. Das Beschlagoberteil 108, die Sperrklinke 115 und das Fangstück 117 sind doppelt ausgebildet, d.h. die beiden gleich ausgebildeten Hälften dieser in der x-z-Ebene angeordneten Bauteile sind in y-Richtung nebeneinander und zwischen den beiden Wänden des hohlprofilierten Beschlagunterteils 105 angeordnet, um die auftretenden Kräfte aufnehmen und weiterleiten zu können.

In y-Richtung ist auf einer Seite der Sperrklinke 115 ein Steuerstück 121 drehfest an dieser angebracht. Ein Spannstück 129, welches in der gleichen Ebene wie das Steuerstück 121 auf dem gleichen Lagerbolzen 131 wie das Fangstück 117 schwenkbar gelagert ist, wird durch eine Schraubenknickfeder 133 zum Steuerstück 121 der Sperrklinke 115 zu der von der Verzahnung 115' abgewandten Seite hin vorgespannt. Über eine exzentrisch gekrümmte Spannfläche drückt das Spannstück 129 gegen das an dieser Stelle flacher ausgebildete Steuerstück 121, wodurch die Verzahnung 115' der Sperrklinke 115 spielfrei in den Zahnkranz 112 gedrückt wird.

Am Fangstück 117 ist außermittig ein in y-Richtung abstehender Entriegelungsbolzen 145 angebracht, welcher durch eine Kulisse 147 in einer Wand des Beschlagunterteils 105 ragt und durch diese innerhalb der x-z-Ebene geführt ist. Zum Entriegeln des Gelenkbeschlages 101 wird am Entriegelungsbolzen 145 geeignet gezogen, worauf das Fangstück 117 von der Sperrklinke 115 wegschwenkt und nach einem kurzen Schwenkwinkel über einen nicht näher dargestellten Mitnehmer das Spannstück 129 mitnimmt. Dadurch kommt die Sperrklinke 115 frei, welche durch ihr Eigengewicht, durch Druck auf die Rückenlehne 104 oder durch einen Mitnehmerarm des Fangstücks 117 aus dem Zahnkranz 112 gedrückt oder ausgehoben wird, so daß der Gelenkbeschlag 101 entriegelt ist. Das Verriegeln erfolgt über die verschiedenen Federbelastungen.

Auf beiden Seiten des Gelenkbeschlages 101 ist jeweils auf der Außenseite des Beschlagunterteils 105 eine Zuglasche 149 vorgesehen, die aus hochfestem Stahl gefertigt ist, z.B. 25CrMoY. Jede der beiden Zuglaschen 149 ist sowohl auf dem Lehnenbolzen 110 als auch auf dem Klinkenbolzen 113 gelagert, so daß der Klinkenbolzen 113 auf dem Lehnenbolzen 110 abgestützt ist. Die flache, längliche Zuglasche 149 verjüngt sich leicht von dem auf dem Lehnenbolzen 110 gelagerten Ende zu dem auf dem Klinkenbolzen 113 gelagerten Ende hin.

Im Crashfall, beispielsweise bei einem Frontcrash, werden die an der Rückenlehne 104 entstehenden Kräfte über das Beschlagoberteil 108 in den Gelenkbeschlag 101 eingeleitet. Ein Teil der Crashkräfte wird über den Zahnkranz 112 als öffnendes Moment auf die Sperrklinke 115 gegeben. Das nunmehr in Öffnungsrichtung anliegende Fangstück 117 verhindert ein Aufschwenken der Sperrklinke 115 um den Klinkenbolzen 113. Ohne die Zuglaschen 149 würde der Verzahnungsüberdekkungsgrad zwischen der Verzahnung 115' und dem Zahnkranz 112 von einem Wälzpunkt aus, welcher aufgrund des Fangstücks 117 im Eingriffsbereich der am weitesten vom Klinkenbolzen 113 entfernten Zähne der Verzahnung 115' in die entsprechenden Zähne des Zahnkranzes 112 liegt, immer geringer werden. Ohne die Zuglaschen 149 würde nämlich die Sperrklinke 115 aufgrund ihrer Belastung nach hinten weggedrückt werden, so daß eine entsprechende langlochförmige Verformung im Beschlagunterteil 105 entstünde, während zugleich ein anderer Teil der Crashkräfte über das mit einem Drehmoment nach vorne belastete Beschlagoberteil 108 den Lehnenbolzen 110 nach vorne ziehen würde, so daß eine andere, insbesonders anders gerichtete, langlochförmige Verformung im Beschlagunterteil 105 entstünde. Ohne die Zuglaschen 149 würden sich daher, ausgehend von dem vom Wälzpunkt entfernt gelegenen Ende in Richtung zum Wälzpunkt hin, die Zähne der Verzahnung 115' und des Zahnkranzes 112 unter Verringerung des Überdeckungsgrades von einander entfernen.

Durch die Zuglaschen 149 wird der Klinkenbolzen 113 in konstantem Abstand zum Lehnenbolzen 110 gehalten, so daß im Crashfall der Klinkenbolzen 113 dem Lehnenbolzen 110 hinterher nach oben gezogen wird und damit der Zahneingriff zwischen der Verzahnung 115' und dem Zahnkranz 112 nicht nur im Bereich des Wälzpunktes, sondern vollständig oder nahezu vollständig erhalten bleibt. Das Beschlagunterteil 105 muß dann im Bereich des Lagers des Klinkenbolzens 113 und des Lehnenbolzens 110 nicht besonders verstärkt werden, um die langlochförmigen Verformungen im Crashfall zu vermeiden. Vielmehr kann das Beschlagunterteil 105 aus Stahlblech mit konstanter, geringer Dicke ausgebildet werden, beispielsweise aus QStE460. Die Crashkräfte werden letztendlich über eine gemeinsame, gleichgerichtete, gleich große und synchrone Deformation des Beschlagunterteils 105 durch den Lehnenbolzen 110 und den Klinkenbolzen 113 in das Beschlagunterteil 105, weiter in die Sitzteilstruktur und schließlich in die Fahrzeugstruktur eingeleitet.

### Bezugszeichenliste

- 101: Gelenkbeschlag
- 103: Rücksitzbank
- 104: Rückenlehne
- 105: Beschlagunterteil
- 108: Beschlagoberteil
- 110: Lehnenbolzen
- 112: Zahnkranz
- 113: Klinkenbolzen
- 115: Sperrklinke
- 115': Verzahnung
- 115": Klinkenarm
- 117: Fangstück
- 119: Fangstückfeder
- 121: Steuerstück
- 129: Spannstück
- 131: Lagerbolzen
- 133: Schraubenknickfeder
- 145: Entriegelungsbolzen
- 147: Kulisse
- 149: Zuglasche

## Patentansprüche

1. Einsteller für einen Fahrzeugsitz, insbesondere für einen Kraftfahrzeugsitz, welcher als Gelenkbeschlag (101) ausgebildet ist, mit einem ersten Beschlagteil (105), einem relativ zum ersten Beschlagteil (105) um einen eine Lehnendrehachse bildenden Lehnenbolzen (110) schwenkbar gelagerten zweiten Beschlagteil (108) und einer am ersten Beschlagteil (105) schwenkbar gelagerten Sperrklinke (115), welche zum Verriegeln des Einstellers mit dem zweiten Beschlagteil (108) zusammenwirkt, wobei ein die Sperrklinke (115) lagernder Klinkenbolzen (113) mittels zweier Laschen (149), welche sowohl auf dem Lehnenbolzen (110) als auch auf dem Klinkenbolzen (113) sitzen, auf dem Lehnenbolzen (110) abgestützt ist, **dadurch gekennzeichnet, dass** das erste Beschlagteil (105) als Hohlprofil ausgebildet ist, in dessen Innerem die Sperrklinke (115) angeordnet ist und auf dessen Außenseiten je eine der beiden Laschen (149) angeordnet ist.

2. Einsteller nach Anspruch 1, **dadurch gekennzeichnet, dass** die Laschen (149) aus hochfestem Stahl gefertigt sind.

3. Einsteller nach Anspruch 1 oder 2, **dadurch gekennzeichnet, dass** der Gelenkbeschlag (101) als Rastbeschlag ausgebildet ist, bei welchem die Sperrklinke (115) mit dem zweiten Beschlagteil (108) mittels eines Zahneingriffs zwischen einer Verzahnung (115') der Sperrklinke (115) und einem Zahnkranz (112) des zweiten Beschlagteils (108) zusammenwirkt.

4. Einsteller nach Anspruch 3, **dadurch gekennzeichnet, dass** ein vorgespanntes Spannstück (129) mittels einer exzentrisch gekrümmten Spannfläche gegen ein an der Sperrklinke (115) drehfest angebrachtes Steuerstück (121) drückt, wodurch die Verzahnung (115') der Sperrklinke (115) spielfrei in den Zahnkranz (112) gedrückt wird.

5. Einsteller nach Anspruch 4, **dadurch gekennzeichnet, dass** eine Schraubenknickfeder (133) das Spannstück (129) zum Steuerstück (121) zu der von der Verzahnung (115') abgewandten Seite hin vorspannt.

6. Einsteller nach Anspruch 4 oder 5, **dadurch gekennzeichnet, dass** ein am ersten Beschlagteil (105) schwenkbar gelagertes, nockenförmiges Fangstück (117) die Sperrklinke (115) für den Crashfall sichert.

7. Einsteller nach Anspruch 6, **dadurch gekennzeichnet, dass** im Crashfall ein Teil der Crashkräfte über den Zahnkranz (112) als öffnendes Moment auf die Sperrklinke (115) gegeben wird, wobei das nunmehr in Öffnungsrichtung anliegende Fangstück (117) ein Aufschwenken der Sperrklinke (115) um den Klinkenbolzen (113) verhindert.

8. Fahrzeugsitz, insbesondere Kraftfahrzeug-Rücksitzbank, mit einem Einsteller nach einem der Ansprüche 1 bis 7.

## Claims

1. Adjuster for a vehicle seat, in particular for a motor vehicle seat, which adjuster is in the form of an articulated fitting (101), having a first fitting member (105), a second fitting member (108) which is supported so as to be pivotable relative to the first fitting member (105) about a backrest pin (110), which forms an axis of rotation of the backrest, and having a pawl (115) which is pivotably supported on the first fitting member (105) and which co-operates with the second fitting member (108) in order to lock the adjuster, a pawl pin (113) which supports the pawl (115) being supported on the backrest pin (110) by means of two tongues (149) which are seated both on the backrest pin (110) and on the pawl pin (113), **characterised in that** the first fitting member (105) is in the form of a hollow profile-member, inside which the pawl (115) is arranged and at the outer sides of which each of the two tongues (149) is arranged.

2. Adjuster according to claim 1, **characterised in that** the tongues (149) are produced from high-strength steel.

3. Adjuster according to claim 1 or claim 2, **characterised in that** the articulated fitting (101) is in the form of a locking fitting, wherein the pawl (115) co-operates with the second fitting member (108) by means of meshing between a tooth arrangement (115') of the pawl (115) and a toothed ring (112) of the second fitting member (108).

4. Adjuster according to claim 3, **characterised in that** a pretensioned clamping piece (129) presses against a control piece (121), which is fitted in a rotationally secure manner to the pawl (115), by means of an eccentrically curved clamping face, whereby the tooth arrangement (115') of the pawl (115) is pressed into the toothed ring (112) in a play-free manner.

5. Adjuster according to claim 4, **characterised in that** a curved helical spring (133) biases the clamping piece (129) towards the control piece (121) towards the side facing away from the tooth arrangement (115').

6. Adjuster according to claim 4 or claim 5, **characterised in that** a cam-like catch piece (117), which is pivotably supported on the first fitting member (105), secures the pawl (115) in the event of a crash.

7. Adjuster according to claim 6, **characterised in that**, in the event of a crash, some of the crash forces are transmitted to the pawl (115) by way of the toothed ring (112) as an opening moment, the catch piece (117) which is in abutment in the opening direction, preventing the pawl (115) from pivoting open about the pawl pin (113).

8. Vehicle seat, in particular the rear seat of a motor vehicle, having an adjuster according to any one of claims 1 to 7.

## Revendications

1. Dispositif de réglage pour un siège de véhicule, en particulier pour un siège de véhicule automobile, lequel est réalisé sous la forme d'une ferrure d'articulation (101), comportant une première partie de ferrure (105), une seconde partie de ferrure (108) montée à pivotement par rapport à la première partie de ferrure (105) autour d'un tourillon de dossier (110) formant un axe de rotation du dossier, et un cliquet d'arrêt (115) monté de façon pivotante sur la première partie de ferrure (105), lequel coopère avec la deuxième partie de ferrure (108) pour verrouiller le dispositif de réglage, à l'occasion de quoi un tourillon de cliquet (113) montant le cliquet d'arrêt (115) au moyen de deux colliers de fixation (149) qui s'appuient non seulement sur le tourillon de dossier (110) mais encore sur le tourillon de cliquet (113), est appuyé sur le tourillon du dossier (110), **caractérisé par le fait que** la première partie de ferrure (105) est réalisée sous la forme d'un profilé creux, à l'intérieur duquel le cliquet d'arrêt (115) est disposé et sur chaque côté extérieur duquel est disposé respectivement l'un des deux colliers de fixation (149).

2. Dispositif de réglage selon la revendication 1, **caractérisé par le fait que** les colliers de fixation (149) sont fabriqués en acier à résistance élevée.

3. Dispositif de réglage selon l'une des revendications 1 ou 2, **caractérisé par le fait que** la ferrure d'articulation (101) est réalisée sous la forme d'une ferrure d'encliquetage, pour laquelle le cliquet d'arrêt (115) coopère avec la deuxième partie de ferrure (108) au moyen d'un engrenage entre une denture (115') du cliquet d'arrêt (115) et une couronne dentée (112) de la deuxième partie de ferrure (108).

4. Dispositif de réglage selon la revendication 3, **caractérisé par le fait qu'**une pièce de serrage (129) précontrainte appuie au moyen d'une surface de serrage à courbure excentrique contre une pièce de commande (121) montée solidaire en rotation sur le cliquet d'arrêt (115), ce par quoi la denture (115') du cliquet d'arrêt (115) est en appui sans jeu dans la couronne dentée (112).

5. Dispositif de réglage selon la revendication 4, **caractérisé par le fait qu'**un ressort cylindrique de compression (133) met en précontrainte la pièce de tension (129) sur la pièce de commande (121) sur le côté situé à l'opposé de la denture (115').

6. Dispositif de réglage selon l'une des revendications 4 ou 5, **caractérisé par le fait qu'**une pièce de sûreté (117) en forme de saillie, montée de façon pivotante sur la première partie de ferrure (105) assure le cliquet (115) en cas d'accident.

7. Dispositif de réglage selon la revendication 6, **caractérisé par le fait qu'**en cas d'accident, une partie des forces de collision est transmise par la couronne dentée (112) sous la forme d'un moment ouvrant sur le cliquet d'arrêt (115), à l'occasion de quoi la pièce de sûreté (117) s'étendant désormais dans la direction d'ouverture empêche un pivotement du cliquet d'arrêt (115) autour du tourillon de cliquet (113).

8. Siège de véhicule, en particulier banquette arrière de véhicule automobile, comportant un dispositif de réglage tel que défini à l'une des revendications 1 à 7.
